(19) Europäisches Patentamt
European Patent Office
Office européen des brevets

(11) Veröffentlichungsnummer : **0 465 682 B1**

(12) # EUROPÄISCHE PATENTSCHRIFT

(45) Veröffentlichungstag der Patentschrift :
**10.03.93 Patentblatt 93/10**

(51) Int. Cl.$^5$ : **A23L 1/06,** A23L 1/064, A23L 1/0524

(21) Anmeldenummer : **90111590.7**

(22) Anmeldetag : **19.06.90**

(54) **Verfahren zur Herstellung von pektin- und zuckerhaltigen Zubereitungen, wie Konfitüre, Marmelade od.gdl.**

Die Akte enthält technische Angaben, die nach dem Eingang der Anmeldung eingereicht wurden und die nicht in dieser Patentschrift enthalten sind.

(30) Priorität : **13.06.90 DE 4018915**

(43) Veröffentlichungstag der Anmeldung :
**15.01.92 Patentblatt 92/03**

(45) Bekanntmachung des Hinweises auf die Patenterteilung :
**10.03.93 Patentblatt 93/10**

(84) Benannte Vertragsstaaten :
**AT BE CH DE DK ES FR GB GR IT LI LU NL SE**

(56) Entgegenhaltungen :
**CH-A- 233 550**
**FR-A- 872 979**
**FR-A- 2 529 445**
**PATENT ABSTRACTS OF JAPAN, Band 11, Nr. 222 (C-435)(2669), 18. Juli 1987**
**PATENT ABSTRACTS OF JAPAN, Band 6, Nr. 135 (C-115)(1013), 22. Juli 1982**

(73) Patentinhaber : **Oelsner, Manfred**
**Windmühlenweg 39**
**W-2000 Hamburg 52 (DE)**

(72) Erfinder : **Oelsner, Manfred**
**Windmühlenweg 39**
**W-2000 Hamburg 52 (DE)**

(74) Vertreter : **Richter, Werdermann & Gerbaulet**
**Neuer Wall 10**
**W-2000 Hamburg 36 (DE)**

**EP 0 465 682 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von pektin- und zuckerhaltigen Zubereitungen, insbesondere aus frischen oder frisch erhaltenen entkernten oder entsteinten Früchten, Obstfruchtfleisch, Obstpulpe oder Obstmark, wie Marmelade, Konfitüre u.dgl..

Das Einkochen von Konfitüren, Gelees und Marmeladen aus Frucht, Zucker, Pektin und Genußsäure ist bekannt. Aroma, Farbe und Konsistenz sowie die Erhaltung und Verteilung der Früchte bestimmen im wesentlichen die Qualitätsmerkmale von Konfitüren, Gelees und Marmeladen. Diese Eigenschaften sind jedoch in starkem Maße von jeweils eingesetzten Rohstoffen abhängig. Der Zusatz von Zuckerstoffen, Pektin und Genußsäure gibt dem Fertigprodukt seine charakteristische Eigenart. Für die Herstellung von Konfitüren und Marmeladen wird Steinobst, Kernobst und Beerenobst in geeignetem Zustand verwendet. Zur Konfitürenherstellung kommt vorwiegend Raffinade oder Weißzucker in Form von Zuckerlösungen, die sich durch relativ niedrige Viskosität auszeichnen, zur Anwendung; sie sind temperaturtolerant und kristallisieren auch bei niedriger Temperatur nicht aus. Neben Zucker wird zur Herstellung von Konfitüren und Marmeladen Glukosesirup sowie ferner Pektin und Genußsäure eingesetzt, wobei insbesondere in den Mehrkomponentensystemen von Konfitüre und Marmelade das Pektin die strukturgebende Rolle spielt und in der jeweils notwendigen Menge für die Gelierung eingesetzt wird. Als Genußsäuren werden u.a. Milchsäure, Citronensäure, Weinsäure u.dgl. verwendet, die zur Einstellung des jeweils günstigen pH-Wertes dienen, zumal der günstigste pH-Wert zur Gelbildung bei 3,0 liegt. Die Einstellung des für den Gelierungsvorganges optimalen pH-Wertes bei der Konfitüren- und Marmeladenherstellung erfolgt eben durch Zugabe dieser Genußsäure.

Marmeladen und Konfitüren werden im Kochverfahren hergestellt, durch das ein ausreichender Zuckeraustausch zwischen dem flüssigen Medium und der Frucht erzielt wird, um ein Auswässern im Fertigprodukt während der Lagerung zu verhindern. Zur industriellen Herstellung von Konfitüren und Marmeladen sind die verschiedensten Kochkessel entwickelt worden, wobei jedoch vom Einkochprinzip zwei Arten unterschieden werden, nämlich das Kochen im offenen Kessel unter Atmosphärendruck und das Kochen im geschlossenen Vakuumkessel bei Unterdruck. Das Herstellen von Marmeladen und Konfitüren im offenen Kessel wird nur noch in wenigen, oft kleinen Herstellerbetrieben durchgeführt. Beim erstgenannten Verfahren wird zunächst nur die Frucht und die Pektin-Zuckermischung auf 80°C bis 90°C erhitzt und bei dieser Temperatur etwa 5 bis 10 Minuten erhitzt. Die Pektine gehen in Lösung. Ziel des Verfahrens ist es, die Trockenpektine zu lösen und den Lösungsvorgang bei niedrigeren Temperaturen durchzuführen, um die Früchte zu schonen. Alternativ wird das Lösen der Pektine aber auch durch kurzes Aufkochen, etwa 2 Minuten bei 100°C bis 102°C, durchgeführt. Beide Maßnahmen haben jedoch zur Folge, daß die unvermeidliche und auch bezweckte Wasserdampfung das Aroma schädigt.

Das Aroma wird aber umso mehr geschützt, wenn die Erhitzung und Verdampfung bei hohen Zuckerkonzentrationen vorgenommen wird, denn Zucker bindet das Aroma.

Bei der vorgenannten, bekannten Verfahrensweise ist jedoch das Aroma "ungeschützt" der Erhitzung und Verdampfung ausgesetzt. Dagegen hat sich das Einkochen im geschlossenen Vakuumkessel bei Unterdruck durchgesetzt. Beim zweitgenannten Kochverfahren werden zunächst die Früchte und der zugesetzte Zucker auf 70°C oder 95°C aufgeheizt und vermittels geeigneter Rührwerke durchmischt. Die vorgewärmte Frucht-Zuckermischung wird dann vom Vorwärmer durch Vakuum in den eigentlichen Kochkessel eingesogen und unter Dampfzufuhr und Rühren im Vakuum eingedampft. Es wird dann die Pektinlösung zudosiert und im Vakuum bis zum Erreichen der gewünschten Endtrockenmasse weiter eingedampft; es erfolgt dann bei Erreichen der Endtrockenmasse die Zudosierung der Säure, wobei dann ein Abfüllen des Fertigproduktes bei etwa 75°C bis 85°C erfolgt. Beim Vakuumkochverfahren wird jedoch das Kochen in geschlossenen Kochkesseln unter vermindertem Druck durchgeführt. Bei diesem Verfahren wird mit niedrigen Kochtemperaturen und kurzen Kochzeiten gearbeitet, wodurch sich eine hohe Wirtschaftlichkeit des Verfahrens ergeben soll. Auch bei diesem Verfahren wird mit einem Vorwärmer gearbeitet, der dem eigentlichen Vakuumkessel vorgeschaltet ist. Der technische Aufwand derartiger Vakuum-Kochanlagen ist relativ groß. Alle Zusätze werden in flüssiger Form der Frucht dabei zugegeben.

Da bei dem bekannten Vakuum-Verfahren zur Herstellung von Konfitüren und Marmeladen Pektine in gequollenem Zustand oder in gelöster Form sowie auch die Genußsäure in Form einer Lösung zugegeben werden, gehen alle diese Lösungen in das Gesamtprodukt ein. Das Ergebnis ist letztlich ein hoher Wassergehalt und die hohen Wasseranteile müssen verdampft werden. Vorteilhaft ist bei dem Einkochverfahren im Vakumkessel, daß bei Temperaturen um etwa 70°C erhitzt wird, wohingegen jedoch in Kauf genommen werden muß, daß eine Aromaverdampfung erfolgt, mit der Folge, daß ein Endprodukt mit geringem Aromengehalt erhalten wird. Es sind daher auch Kochanlagen mit Aromenrückgewinnung bekannt, bei denen aus den Brüden die flüchtigen Aromenanteile kondensiert und dem Kochgut vor dem Ablassen des Ansatzes wieder zugesetzt werden. Derartige Kochanlagen sind jedoch sehr aufwendig. Hinzu kommt, daß die Qualität des Endproduktes

abnimmt, je weniger Zucker bei der Kochung selbst im Produkt vorhanden ist. Auch bei der Vakuum-Kochung wurde erkannt, daß der gesamte Zucker für die Erhaltung des Aromas vorteilhaft ist. Deshalb wird bei niedriger Temperatur gekocht, was aber wiederum dazu führt, daß auch hier Aromaverluste auftreten.

Nach den vorbeschriebenen bekannten Verfahren, insbesondere bei der Herstellung von Konfitüren unter Vacuum, werden von der Industrie für die Gelierung der Produkte in Wasser gelöste Pektine eingesetzt. Zusätzlich wird, auch aus wirtschaftlichen Erwägungen, Kristallzucker durch Glucosesirup ersetzt und mit dieser Maßnahme werden weitere Wasseranteile in das Einsatzprodukt getragen. Glucosesirup enthält nur 80 % Trockensubstanz und 20 % Wasser. Die unerwünschte Erhöhung des Wassergehaltes im Einsatzprodukt - Frucht, Zucker und Glucosesirup - einschl. der Pektinlösung ist nach den bekannten Verfahren und aus wirtschaftlichen Gründen nicht zu vermeiden. Mit einem zusätzlichen Energieaufwand werden dann bei der Herstellung der Konfitüren der Wassergehalt der Pektinlösung und des Glucosesirups wieder verdampft und dabei unvermeidbar Aromen verloren. Den Aromaverlust sollen dann Anlagen zur Aromarückgewinnung und Aromazugaben kompensieren.

Nach der FR-A-2 529 445 ist ein Verfahren zur Herstellung von Konfitüren bekannt, bei dem eine Mischung aus Früchten, Zucker, Pektin und eventuell anderen Zutaten auf eine Temperatur über 70°C und vorzugsweise nicht über 105°C erhitzt wird, wobei das Pektin und die genannten anderen Zutaten eventuell nach dem Beginn der Erhitzung zugesetzt werden können. Das Verfahren sieht kein Verdampfen des der Mischung anhaftenden Wassers vor. Bei den angegebenen Temperaturen wird die Mischung nur erhitzt, so daß das durch die eingesetzte Frucht eingebrachte Wasser und das zusätzlich in die Mischung eingebrachte Wasser nicht entfernt wird. Hinzu kommt, daß die zur Herstellung der Konfitüre eingesetzten Ausgangsprodukte gemischt in einem einzigen Verfahrensgang zur Konfitüre verarbeitet werden. Die Ausgangsprodukte werden nicht aufgeteilt und in getrennten Verfahren behandelt, um dann die beiden getrennt erhaltenen Produkte zum verkaufsfertigen Endprodukt zu vermischen. Mit diesem Verfahren sind Konfitüren mit einem Fruchtanteil von etwa 55 % und einem Anteil an Trockensubstanz in Höhe von 65 % nicht erreichbar, da die Mischung aus dem Ausgangsprodukten nicht verdampft wird. Für eine Konfitüre kann jedoch von einem geringen Fruchtanteil oder von einer zu geringen Trockensubstanz nicht ausgegangen werden. Es werden daher keine Konfitüren, sondern Fruchtzubereitungen erhalten.

Des weiteren sieht dieses Verfahren vor, daß die eingesetzte Mischung aus Früchten, Zucker, Pektin verschiedene Komponentenzusammensetzungen aufweisen kann. So können 100-700 g Früchte, 300-600 g trockenen Zucker, 0-500 g Wasser und 2-10 g Pektin u.dgl. eingesetzt werden. In denjenigen Fällen, in denen der Mischung aus Früchten, Zucker und Pektin Wasser zugesetzt wird, wird der Wasseranteil des Gesamtproduktes wesentlich erhöht, denn ein weiterer Wasseranteil kommt durch die eingesetzten Früchte hinzu. Werden 100 g Früchte mit 500 g Wasser verarbeitet, dann wird eine wässrige Konfitüre erhalten; ein derartiges Produkt ist keine Konfitüre mehr, sondern lediglich eine Fruchtzubereitung, denn sowohl das den Früchten anhaftende Wasser als auch zugegebenes Wasser wird wegen fehlender Verdampfungsmöglichkeit nicht beseitigt.

Bei einem hohen Fruchtanteil und einem geringen Zuckeranteil wird ein Gehalt an Trockensubstanz von 37 % (sehr gering) erhalten, wobei der Fruchtanteil bei etwa 70 % liegt. Durch den niedrigen Anteil an Trockensubstanz wird aber keine Konfitüre erhalten. Wird auch noch Wasser hinzugegeben, dann verringert sich der Fruchtanteil ebenso wie der Anteil an Trockensubstanz. Es wird ein Produkt erhalten das ebenfalls keine Konfitüre ist, sondern eine Fruchtzubereitung. Bei einem hohen Anteil an Trockensubstanz und einem niedrigen Fruchtanteil wird durch die Zugabe von Wasser der Fruchtanteil und der Trockensubstanzanteil verringert. Der Anteil an Früchten liegt dann unterhalb von 10 %. Mit dem bekannten Verfahren können daher keine Produkte erhalten werden, die den an eine Konfitüre gestellten Anforderungen entspricht.

Der Erfindung liegt die Aufgabe zugrunde, ein Verfahren der Eingangs genannten Art zu schaffen, mit dem der Wassergehalt im Einsatzprodukt trotz Einsatz von Glucosesirup verringert wird. Des weiteren ist es Aufgabe, Trocken-Pektine unter den verschiedensten Bedingungen, wie bei einem hohen Zuckergehalt, bei ausschließlicher Anwesenheit von Frucht, einer zusätzlichen Druckzufuhr oder unter Ausschluß eines zusätzlichen äußeren Druckes bei Temperaturen unter oder über 100°C, derart in Lösung zu bringen, daß quasi ungekochte Marmeladen und Konfitüren mit einem hohen Fruchtanteil und einer hohen Trockensubstanz und einer mehrjährigen Lagerung ohne Schimmelbildung und guter Aromahaltung herstellbar sind.

Gelöst wird die Aufgabe bei einem Verfahren der eingangs genannten Art mit den in den Ansprüchen 1 und 2 angegebenen Verfahrensmaßnahmen.

Bei den beiden Verfahren werden durch die separate Eindickung eines Anteils der gesamten eingesetzten Fruchtmenge zusammen mit dem Anteil an Glucosesirup etwa 5 % Aromaanteile zwar zerstört, aber etwa 40 % Aromaanteile bleiben vollständig erhalten, denn die Hauptmenge der Früchte wird durch die kurzzeitige Zuführung von Heißluft oder auch im Vakuum bei der Einstellung der Trockenmasse nicht wesentlich geschädigt, so daß das volle Aroma in einem weitaus größeren Prozentsatz erhalten bleibt, als wenn die gesamte Menge

an Frucht (z.B. 45 %) mit dem Glucosesirup (10 %) und dem kristallinen Zucker (45 %) unter Druck in einem geschlossenen Kochkessel erhitzt wird, denn in diesem Fall entstehen größere Mengen an Wasserdampf, der durch Heißlufteinführung unter immer größerem Zeitraum beseitigt werden muß. Die separate Eindickung ist nicht nur durch die Verwendung von 80%igem Glucosesirup oder bei Diätkonfitüre als 70 %ige Fructose, oder, wenn kein Glucosesirup eingesetzt wird oder werden darf, wird bei der Einkochung eine 80 %ige Zuckerlösung eingesetzt, möglich, der auch bis zu 20 % oder mehr als Einsatzprodukt Verwendung finden kann. Als weitere Einsatzprodukte kommen Invertzucker- und Isoglucoselösungen zur Anwendung.

Der wirtschaftliche Vorteil dieses Verfahrens besteht auch noch darin, daß Glucosesirup preiswerter als Zucker ist.

In dem Fall, in dem Trocken-Pektine eingesetzt werden, wird unter Druck erhitzt. Werden dagegen Naß-Pektine verwendet, dann wird kurz unter Vakuum ohne Druck erhitzt. In diesem Falle wird der Anteil an Frucht des separat einzukochenden Anteils um 1 % bis 3 % erhöht. In allen Fällen erfolgt die Pektin-Zugabe nicht zu dem separat einzukochenden Anteil.

Vorteilhaft ist ein Verfahren, nach dem man

a) einer ersten Charge aus 45 % Frucht, 10 % Glucose-Sirup und 45 % kristallinem Zucker ein Anteil von 5 % Frucht und 10 % Glucose-Sirup entnimmt,

b) die zweite Charge aus 5 % Frucht und 10 % Glucose-Sirup in einem Kochkessel unter Aromaverlust einkocht,

c) in einem gesonderten, geschlossenen Kessel den aus der ersten Charge verbleibenden Anteil von 40 % Frucht und 0 bis 45 % kristallinem Zucker mit 0,3 % Trocken-Pektin unter Druck auf etwa 90°C bis 100°C erhitzt, das Kochprodukt bei dieser Temperatur etwa fünf Minuten hält,

d) das aus der zweiten Charge erhaltene, heiße Kochprodukt dem Produkt der ersten Charge mit den verbliebenen Anteilen hinzugibt, die beiden miteinander vermischten Kochprodukte auf Pasteurisierungstemperatur erhitzt und

e) nach Abkühlung auf 75° bis 85°C das erhaltene Endprodukt in Gläser od.dgl. abfüllt.

Als erste Maßnahme wird nur noch Trocken-Pektin für die Gelierung eingesetzt, das sich unter Druck in zuckerhaltigen Zubereitungen löst. Als zweite Maßnahme wird erfindungsgemäß die gesamte Wasserverdampfung, die aus dem Wasserüberschuß der Früchte und des Glucose-Sirups resultiert, über einen kleinen Anteil der eingesetzten Früchte und des Glucose-Sirups separat vorgenommen, wobei die Zerstörung eines geringen Prozentsatzes an Aromaanteilen in Kauf genommen wird, um einen hohen Prozentsatz an Aromaanteilen zu erhalten.

Erfindungsgemäß wird hiernach so vorgegangen, daß man

a) den Einsatzprodukten aus 45 % Frucht
5 % Glucosesirup
50 % kristal. Zucker

b) einen Anteil aus 5 % Frucht und
5 % Glucosesirup

entnimmt und separat einkocht,

c) die verbliebenen Einsatzprodukte aus 40 % Frucht
45 % Zucker

mit Trocken-Pektin mischt und in Abhängigkeit von der Löslichkeit der Pektine die Anteile aus b) und c) variabel einsetzt und unter Druck auf 95 bis 110°C erhitzt. Nach der Säurezugabe wird bei Geliertemperatur abgefüllt.

In der beschriebenen Verfahrensweise wird die Feinabstimmung der vorgegebenen Trockensubstanz mit Heißluft vorgenommen, die über die Oberfläche des Produktes geleitet wird oder erfolgt mit Vakuum. Wird dagegen Naß-Pektin eingesetzt, dann erfolgt das Erhitzen im Vakuum ohne Druck. Es ist dann erforderlich, dem separat einzukochenden Anteil einen höheren Fruchtanteil gegenüber dem Fruchtanteil zu geben, der bei der

Einkochung mit Trocken-Pektinen vorgesehen ist, wobei dieser Mehranteil 1 % bis 3 % betragen und wenn erforderlich, auch höher liegen kann. Bei den Naß-Pektinen handelt es sich um Pektinlösungen.

Für die Anteile von Frucht und Glucosesirup gemäß Stufe b) ergeben sich beispielsweise bei den verschiedenen Verhältnissen nach der Einkochung folgende Konsistenzen:

Glucosesirup ↓

Das Verhältnis 1 : 1 = nach der Einkochung : viskos flüssig bei etwa 100°C

| | | | | |
|---|---|---|---|---|
| Das Verhältnis | 1 : 0,5 | = | bei etwa 100°C | : hoch viskos |
| " | 1 : 2 | = | " | : flüssig |
| " | 1 : 3 | = | " | : fast wie Glucosesirup bei 80°C |

Besonders vorteilhaft ist es bei den Verfahren nach den anderen Ansprüchen, daß auch bei einem Nullgehalt an Zucker die Trocken-Pektine einbringbar und in einem geschlossenen Kochkessel erhitzbar sind. Das Lösen der Trocken-Pektine erfolgt z.B. schon unterhalb 0,3 bar bei Temperaturen zwischen 40° bis 50° C. Die Trocken-Pektine werden so in Lösung gebracht, ohne daß dabei das Aroma geschädigt wird. Dabei ist wesentlich, daß die Lösung der Trocken-Pektine unter Vermeidung von Wasserdampfverlusten durchführbar ist,was nur in einem geschlossenen System möglich ist. Neben der Einleitung von Druckluft und einem Überdruck von 0,6 bis 0,8 bar ist es auch möglich, keine äußere Druckzufuhr für einen Überdruck von 0,6 bis 0,8 bar anzuwenden, wenn die Temperatur bis etwa 95°C gesteigert wird.

Ein höherer Druck kann auch durch eine Temperatursteigerung erzielt werden.

Trocken-Pektine sind somit auch bei hohen Zuckergehalten lösbar, z.B. durch Zurücknahme des Fruchtanteils, und zwar mit oder ohne Druckzufuhr. Ein Zuckerausgleich bei gleichzeitiger Aromaerhaltung war mit den bekannten Verfahren bisher nicht verwirklichbar. Einer nachträglichen Zugabe von passierten Früchten steht nichts entgegen.

Es ist somit auch möglich, daß ein Teil der Früchte bei hohen Zuckeranteilen, z.B. zwischen 70% und 80%,mit Druck in Temperaturbereichen unter 100°C oder über 100°C erhitzt wird. Die gesetzlich vorgeschriebenen Fruchtanteile werden danach passiert zugefügt und mit den Trocken-Pektinen zusammen noch einmal druckbehandelt.

Zum Einsatz gelangen Zuckerlösungen; auch der Einsatz von kristallinem Zucker ist möglich. Das Pektin wird als Trockenpektin eingesetzt und auch die Genußsäuren werden in kristalliner Form zugesetzt, so daß keine zusätzlichen Wasseranteile hinzukommen und der gesamte Wasseranteil durch den Wasseranteil der Frucht vorgegeben ist. Besonders vorteilhaft ist es bei diesem Verfahren, daß vor der Druckstufe bereits ein hoher Mehrgehalt an Zucker oder der gesamte Zucker der Frucht zugesetzt wird. Je mehr Zucker sich in der Druckstufe befindet, desto besser ist das Endprodukt. Überraschenderweise hat es sich gezeigt, daß die Trockenpektine, die zum Einsatz gelangen, in der Druckstufe völlig gelöst werden. Selbst dies wird auch dann erreicht, wenn der gesamte Zucker vor der Druckstufe zugesetzt worden ist und die Trockenmasse des Endproduktes eingestellt ist. Die Druckstufe eignet sich besonders gut zum Ausgleich der niedrigen Zuckerkonzentration in der Frucht und der höheren Zuckerkonzentration in der Umgebung der Früchte. Durch diese Maßnahme wird das Aufschwimmen der Früchte im Endprodukt vermieden. Die bessere und schnellere Lösung der Pektine wird mit dem Mehrstufenverfahren erzielt. Wesentlich ist, daß in der Druckstufe die bisher "vorbehandelten" Pektine völlig gelöst werden. Mit den Verfahren ist es somit möglich, Trockenpektine einsetzen zu können und deren vollständige Lösung in der Druckstufe zu erreichen. Gerade durch den hohen Zuckeranteil hat sich Überraschenderweise eine Qualitätssteigerung des Endproduktes mit hohem Aromagehalt ergeben. Gegenüber den bekannten Verfahren wird auch bei den erfindungsgemäßen Verfahren verdampft und erhitzt, aber bei einer hohen Zuckerkonzentration. Außerdem werden die Pektine bei höherer Temperatur gelöst, ohne Vorhandensein von Wasser.Trockenpektine sind hiernach bei hohen Zuckerkonzentrationen in Lösung bringbar.

Der Aromengehalt wird dabei erhöht. So sind u.a. nach dem erfindungsgemäßen Verfahren backfeste Konfitüren und Konfitüren für Joghurt-Frucht-Zubereitungen herstellbar. Das Verfahren kann überall dort eingesetzt werden, wo Trockenpektine bei hohem Zuckergehalt in Lösung gebracht werden sollen. So u.a. auch dort, wo Gallerten aus Pektin in Gegenwart von Zucker hergestellt werden, wie den Agar-Agar-Süßwaren gleiche Pektin-Erzeugnisse, bei denen anstelle von Agar-Agar als Geliermittel Pektin eingesetzt wird.

Alle Verfahren führen zu Endprodukten mit einem sehr hohen Aromengehalt.

Bei dem Verfahren nach Anspruch 3 wird in der ersten Kochphase der eingesetzten Fruchtmenge eine Mischung aus Trocken-Pektin und kristallinem Zucker zugegeben, wobei nur ein ganz kleiner Prozentsatz an Zucker der eingesetzten Gesamtmenge an Zucker zunächst eingesetzt wird. Durch das anschließende Erhitzen im geschlossenen Kochkessel wird erreicht, daß das Trocken-Pektin auch bei Einsatz einer geringen Menge an Zucker vollständig in Lösung geht. Die dann nachfolgende Zugabe der restlichen Zuckermenge hält das Aroma. Ein geringfügiger Aromenverlust bei diesem Verfahren kann durch Aromenzugabe ausgeglichen werden. Aus aufgegangenen und konzentrierten Brüdendämpfen kann das so erhaltene Aroma eingesetzt werden.

Desweiteren ist es möglich, anstelle eines Lösens der Trocken-Pektine bei einem hohen Zuckergehalt bei einer oberhalb 100°C liegenden Temperatur im geschlossenen Kochkessel unter Druck das Lösen der Trocken-Pektine bei einer unterhalb der Temperatur von 100°C liegenden Temperatur insbesondere vermittels eines durch Zuleiten eines neutralen Gases, wie z.B. Stickstoff-Gas, erzeugten zusätzlichen Druckes vorzunehmen.

Die Verfahren bieten qualitative und wirtschaftliche Vorteile; sie ergeben eine deutliche Verbesserung des Aromas. Gleichzeitig stellen sie gegenüber heutiger Technik eine Vereinfachung dar, und führen zu einer wesentlichen Einsparung von Energie. Ein weiterer Vorteil ist, daß sich durch die Verfahren konventionelle Verfahren - offene Kochung - problemlos umrüsten lassen. Der apparative Aufwand ist denkbar einfach und ist einfach zu realisieren. Die Verfahren ersetzen die aufwendige Vakuumtechnik bei der Herstellung hochwertiger Produkte. Die Verbesserung des Aromas und die Senkung des Energiebedarfs werden erzielt, weil nur Trockenpektine eingesetzt werden, die sich unter Druck problemlos lösen. Die Lösung erfolgt auch in höheren Zuckerkonzentrationen. In Versuchen konnte nachgewiesen werden, daß sich Trocken-Pektine und Ersatzprodukte bei der Frucht-Joghurt-Herstellung wie Stärke und Alginate schon bei Drücken unter einem Bar und unter 100°C lösen. Der notwendige Druck kann von außen zugeführt werden oder er entsteht während der Erhitzung im geschlossenen Behälter. In einem weiteren Verfahrensschritt können die Produkte bei weniger als 100°C mit einem Heißluftgebläse auf den vorgegebenen Zuckergehalt eingestellt werden. Dieses Gebläse liefert sterile Heißluft, die über die Oberfläche des Produkts geleitet wird und sorgt gleichzeitig für den Transport des überschüssigen Wasserdampfes.

Mit diesem Verfahren werden quasi ungekochte Konfitüren hergestellt. Für die Gelierung der Produkte werden wässerige Pektinlösungen nicht verwendet. Diese Maßnahme schützt wasserdampfflüchtige Aromaanteile optimal und senkt den Energiebedarf auf ein Minimum.

Ein weiterer verfahrensbedingter Vorteil kann für die Pasteurisierung der Produkte ausgenutzt werden. Nach der Einstellung des Zuckergehaltes bei weniger als 100°C können die Produkte unter Druck über 100°C behandelt werden. Dadurch lassen sich Pasteurisierungsvorgänge verkürzen und die Notwendigkeit entsprechender Techniken wird in Frage gestellt. Im Zusammenhang mit höheren Pasteurisierungstemperaturen können auch höhere Abfülltemperaturen angestrebt werden. Hier spielt der Einsatz geeigneter Pektine bzw. Pektinmischungen eine entscheidende Rolle. In Versuchen mit Erhitzungstemperaturen über 100°C wurde Konfitüre auch bei 90° bis 95°C abgefüllt. Das Aufschwimmen der Früchte ließ sich über die Stückigkeit des Endproduktes steuern und unterbinden. Unter Verfahrensbedingungen - Lösung der Pektine unter Druck und Einstellung der Trockensubstanz - sind Aromaverluste und Qualitätsunterschiede bei Herstellungstemperaturen zwischen 90° bis 100°C und im Bereich von 100° bis 107°C nicht zu erkennen.

Die Verfahren ergeben entschäumte Produkte, die naturtrübe bis blank und von guter Konsistenz sind und, ein sehr gutes Aroma haben.

Vorteilhafte Weiterbildungen der Erfindung sind in den Unteransprüchen gekennzeichnet.

Vorteilhafte Ausgestaltungen der Erfindung sind in den Unteransprüchen gekennzeichnet.

Das erfindungsgemäße Verfahren wird anhand der nachfolgenden Beispiele bei der Herstellung von Marmelade näher erläutert.

Ausgegangen wird von frischen oder frisch erhaltenen, entkernten oder entsteinten Früchten, von Obstfruchtfleisch u.dgl., wobei auch tiefgefrorenes Obst oder Obstfruchtfleisch zur Anwendung gelangen kann. Je nach der verwendeten Obstart oder den verwendeten Obstarten sind Einfruchtmarmeladen, Mehrfruchtmarmeladen und gemischte Marmeladen herstellbar. Das Einkochen selbst erfolgt in einem in an sich bekannter Weise ausgebildeten Kochkessel.

Beispiel 1

In einem offenen Kochkessel wird einer vorgegebenen Fruchtmenge die gesamte eingesetzte Menge an

kristallinem Zucker und ein Schaumverhüter eingesetzt. Diese Frucht-Zucker-Mischung wird bei 60° bis 80°C, vorzugsweise bei 70°C, erhitzt. Nach Beendigung des Erhitzungsvorganges wird das Trocken-Pektin hinzugegeben und die Mischung aus Frucht-Zucker und Trocken-Pektin auf 90°C erhitzt. Hierauf wird dann Glucosesirup hinzugegeben und die Frucht-Zucker-Mischung weiterhin bei 90°C erhitzt. Bei der Zugabe des Glucosesirups tritt praktisch keine Abkühlung ein.Dabei entstehende Brüdendämpfe werden abgesogen oder durch Einblasen von Luft auf die oberfläche der Frucht-Zucker-Mischung bei 80° bis 90°C wird eine Konzentrierung vorgenommen. Das so erhaltene Gesamtprodukt wird hierauf bei geschlossenem Kessel auf 90° bis 110°C, vorzugsweise auf 105°C, erhitzt, wobei ein Brodeln oder Kochen des Gesamtproduktes vermieden wird. Der Kochraum wird dann durch Aufhebung des Druckes bei Aufrechterhaltung einer Erhitzungstemperatur von etwa 100° bis 95oC entspannt. Es wird dann Zitronensäure als Genußsäure hinzugegeben. Das so erhaltene Gesamtprodukt wird dann weiter im offenen Kochkessel bei Temperaturen zwischen 70° und 95°C bei gleichzeitiger Einstellung des Zuckergehaltes weiterhin erhitzt. Es erfolgt dann das Abkühlen des Endproduktes bei 75° bis 80°C. Das erhaltene Fertigprodukt wird in Gläser oder andersartig ausgebildete Behältnisse abgefüllt. Während des Herstellungsvorganges wird der jeweilige Zuckergehalt refraktometrisch ermittelt.

Zum Einsatz kommen bei diesem Verfahren 45 kg Frucht, 51 kg kristalliner Zucker und Entschäumer. An Trocken-Pektin werden 0,3 bis 0,5 kg eingesetzt.Die Menge an Zitronensäure beträgt etwa 0,2 bis 0,3 kg.Hinzugegeben werden ferner 5 kg Glucosesirup 80%ig.

Beispiel 2

In einem offenen Kochkessel wird eine vorgegebene Fruchtmenge zusammen mit einer Zucker-Trocken-Pektin-Mischung aus einem Teil Trocken-Pektin und fünfzehn Teilen Zucker auf 70°C erhitzt. Die Menge an eingesetztem kristallinem Zucker ist hier gegenüber der eingesetzten gesamten Menge an kristallinem Zucker äußerst gering; er sollte etwa 2% bis 10% betragen. Hierauf wird der offene Kochkessel verschlossen und das Frucht-Zucker-Trocken-Pektin-Gemisch etwa sieben Minuten auf 85° bis 90°C erhitzt. Bei diesem Vorgang entsteht auch ein Druck,der überwiegend aus erhitzter Luft entsteht. Die Trocken-Pektine werden bei dieser Methode unter Vermeidung von Wasserdampf erhitzt.Hieraufhin wird dann die restliche Menge an kristallinem Zucker, dem Glucosesirup zugegeben ist, zugesetzt, wobei die Temperatur in dem Kochkessel von etwa 85° C auf etwa 60°C absinkt. Durch Ansetzen von Vakuum oder über ein Heißluftgebläse wird abgedampft. Es wird hiernach eine ungekochte Konfitüre erhalten. Bei diesem Verfahren werden 45 kg Frucht (Trockensubstanz), 51 kg kristalliner Zucker, Entschäumer, 5 kg Glucosesirup (80%ig), 0,3 bis 0,5 kg Trocken-Pektin und 0,2 bis 0,3kg Zitronensäure als Genußsäure eingesetzt. In der ersten Stufe des Verfahrens werden etwa 1 kg der gesamten eingesetzten kristallinen Zuckermenge mit dem Trocken-Pektion vermischt und der gesamten vorgegebenen Fruchtmenge zugesetzt.

Beispiel 3

Um Trocken-Pektine unter 100°C bei Druck in zuckerhaltigen Lösungen in Lösung zu bringen, wird wie folgt vorgegangen:

| | | | |
|---|---|---|---|
| a) | 45% Frucht | 1000 | g |
| b) | 21% kristal.Zucker | 466,5 | g |
| c) | 4,5% kristal.Zucker | 100 | g |
| d) | 0,3 Anteile Trocken-Pektin | 7 | g |
| e) | 25,5% kristal.Zucker | 566,5 | g |
| f) | 4% Glucosesirup | 89 | g bis |
| | | 111 | g 80%. |

Die Komponenten a) und b) werden in einem offenen Kochkessel auf 70°C erhitzt. Daraufhin werden die Komponenten c) und d) eingerührt. Der Kochkessel wird verschlossen und Druckluft eingeleitet. Es wird ein Überdruck von 0,6 bis 0,8 bar erzeugt bei einer Temperatursteigerung auf 90°C. Im Bereich von 70°C bis 90°C wird der Überdruck vier Minuten lang gehalten, wobei der Druck nur während der Erhitzungszeit ausgeübt wurde. Nach Ablassen des Überdruckes wird der Kochkessel geöffnet und die Komponenten e) und f) hinzugegeben. Hierauf erfolgt dann die Einstellung der Trockensubstanz auf 62% mit einem Heißluftgebläse. Der gesamte Ansatz wird auf 95°C erhitzt und 0,3 Anteile (=7 g) Zitronensäure eingerührt und das Gesamtgemisch auf 75°C abgekühlt und in an sich bekannter Weise abgefüllt.

Nach diesem Verfahren wird eine sehr gute Gelierung des Produktes erreicht. Nach der Druckerhitzung konnte die Lösung der Pektine an der "Glätte" der Mischung erkannt werden. Überraschend war, daß auch Trocken-Pektine unter einer Temperatur von 100°C bei Druck in zuckerhaltigen Lösungen gelöst werden können. Auch bei höheren, bis 50 % Zuckeranteilen ist eine Lösung der Trocken-Pektine möglich. Während bei dem vorangegangenen Beispiel 1133 g an kristallinem Zucker eingesetzt worden sind, besteht auch die Möglichkeit, von größeren Zuckermengen auszugehen, wobei es vorteilhaft ist, wenn die Komponenten b),c) und e) in einem Verhältnis von 21 % : 4,5 % : 25,5 % zugegeben werden; jedoch auch veränderte Verhältniszahlen können zum Tragen kommen. Das Endprodukt weist einen hohen Aromengehalt auf.

Beispiel 4

Zur Lösung der Trocken-Pektine bei einem hohen Zuckeranteil wurde wie folgt vorgegangen:

| | | | | | |
|---|---|---|---|---|---|
| a) | 45% | Frucht | 1000 | g | |
| b) | 46,5% | kristal.Zucker | 1033 | g | |
| c) | 4,5% | kristal.Zucker | 100 | g | |
| d) | 0,3 | Anteile Trocken-Pektin | 7 | g | |
| e) | 4% | Glucosesirup | 89 | g | bis |
| | | | 111 | g | 80%. |

Die Komponenten a), b) und e) werden in einem offenen Kochkessel auf 70°C erhitzt. Danach werden die Komponenten c) und d) eingerührt. Der Kochkessel wird verschlossen und Druckluft eingeleitet. Es wird ein Überdruck von 0,6 bis 0,8 bar bei einer Temperatursteigerung auf etwa 95°C erzeugt. Im Temperaturbereich von 70°C bis 95°C wird der Überdruck fünf Minuten gehalten. Der Überdruck wird nur während der Erhitzungsphase aufrechterhalten. Danach wird der Überdruck aufgehoben, der Kochkessel geöffnet und die Einstellung der Trockensubstanz mit einem Heißluftgebläse vorgenommen. Unter weiterer Erhitzung sinkt die Temperatur während der Einstellzeit auf 90°C. Hieraufhin erfolgt die Säurezugabe in Form von 0,3 Anteilen (= 7 g) und die Abkühlung auf Geliertemperatur bis 75°C, woraufhin dann abgefüllt wird.

Trotz maximaler Zuckerzugabe wurde eine gute Gelierung erreicht. Das erhaltene Produkt ist blasenfrei bei gutem Glanz. Die Menge an eingesetztem Trocken-Pektin kann verringert werden, ohne daß die Gelierung beeinträchtigt wird. Die gute Löslichkeit der Trocken-Pektine bei vollem Zuckereinsatz ist allein durch die Druckanwendung bei den Herstellungstemperaturen unter 100°C hier erreicht. Das Endprodukt weist einen hohen Aromengehalt auf.

Beispiel 5

Um die Trocken-Pektine unter 100°C bei Erhitzung in einem geschlossenen Kochkessel in einem Zucker-Frucht-Gemisch, und zwar auch bei Zuckergehalten von etwa 60%, zu lösen, wird unter Verwendung der nachstehenden Anteile der einzelnen Komponenten wie folgt vorgegangen:

| | | | | |
|---|---|---|---|---|
| a) | 45 % | Frucht | 1000 g | |
| b) | 46,5% | Zucker | 1033 g | |
| e) | 4 % | Glucosesirup | 89 g | = 111 g 80% |
| c) | 4,5% | Zucker | 100 g | |
| d) | 0,3% | Anteile Trocken-Pektin | 7 g | |

Sämtliche Mischungsanteile (a+b+e und c+d) werden bei Raumtemperatur vermischt. Der als Druckbehälter ausgebildete Kochkessel wird verschlossen und die Mischungsanteile auf 95°C erhitzt. Nach Erreichen der Temperatur wird der Druck entspannt und der Kochkessel geöffnet. Die vorgegebene Trockensubstanz wird mit einem Heißluftgebläse eingestellt. Nach der Säurezugabe erfolgt die Abkühlung auf Geliertemperatur.

Druckbedingungen/Erhitzungsdauer.

Versuch 1: Erhitzung und Einstellung des Überdruckes auf const. 0,3 bar.
Erhitzungsdauer: 12 min

Versuch 2: Erhitzung und Druckeinstellung wie vor.
Erhitzungsdauer: 20 min

Versuch 3: Erhitzung und Drucksteigerung auf 0,9 bar.
Erhitzungsdauer: 13 min

Lösung der Pektine bei Einstellung der Trockensubstanz auf 62,5%:

Versuch 1: Weiche Gelierung,Früchte schwimmen nicht auf.
Pektine nicht völlig gelöst.

Versuch 2: Feste Gelierung.

Versuch 3: Feste Gelierung.

Versuchsergebnisse:

Trockenpektine werden während der Erhitzung bei Temperaturen unter 100°C im Druckbehälter auch bei hohen Zuckergehalten gelöst. Die Lösung der Pektine ist zeitabhängig. Durch Steigerung des Druckes kann die Lösung der Pektine beschleunigt werden.

Die Lösung der Pektine bedarf keiner äußeren Druckzufuhr durch Gase wie Stickstoff oder Preßluft.

Bei der Erhitzung der Zuckermischung entsteht ein Partialdruck des Wasserdampfes entsprechend der Zusammensetzung des Gemisches - hier ca. 40% - und der Erhitzung der Luft im Druckbehälter. Der resultierende Druck beträgt bei Erhitzung auf ca. 95°C etwa 0,9 bar Überdruck und ist überwiegend unabhängig von der Größe des Druckbehälters. Die Ergebnisse ohne Druckzufuhr beinhalten auch zwangsläufig die bessere Löslichkeit der Pektine mit Druckzufuhr.

Die Lösung der Trocken-Pektine erfolgt hiernach bei Erhitzungstemperaturen unterhalb 100°C in Bereichen von 0,3 bar bis 0,9 bar oder sogar bis 1,3 bar, wobei im letzteren Fall eine Druckzufuhr erforderlich ist. Hinzu kommt, daß der Zuckeraustausch zwischen der Frucht und der Umgebung zeitlich beeinflußt wird, was bei stückiger Fruchtverteilung in der Masse zu kürzeren Herstellungszeiten führt.

## Beispiel 6

Einer ersten Charge aus 45 % Frucht, 10 % Glucosesirup und 45 % kristallinem Zucker wird ein Anteil von 5 % Frucht und 10 % Glucosesirup entnommen. Die 5 % Frucht und 10 % Glucosesirup (Verhältnis 1:2) werden als zweite Charge unter Aroma-Verlust in einem geschlossenen Kochkessel unter Vakuum oder in einem offenen Kochkessel eingekocht. Der in der ersten Charge verbliebende Anteil von 40 % Frucht und 45 % Zucker wird gesondert in einem geschlossenen Kochkessel unter Druck erhitzt, nach dem diesem Anteil 0,3 % Trocken-Pektin zugesetzt worden ist. Das Erhitzen erfolgt auf etwa 95°C. Das Kochprodukt wird etwa 5 Minuten bei dieser Temperatur gehalten, dann wird der Kochkessel geöffnet. Es werden dann 0,2 bis 0,3 % Zitronensäure hinzugegeben und das aus der zweiten Charge erhaltene, heiße Kochprodukt dem Kochprodukt der ersten durch den ihr entnommenen Anteil verminderten Charge hinzugibt, dann auf Geliertemperatur bei 75°C abkühlt und das erhaltene Endprodukt in Gläser abfüllt. Es kann dabei aber auch so vorgegangen werden, daß Zucker und Früchte in die eingekochte Glucose-Frucht-Mischung eingearbeitet und dann mit Pektin zusammen unter Druck behandelt werden, wobei dann die Feineinstellung der Trockensubstanz vermittels Heißluft und-

/oder Vakuum vorgenommen wird.

In analoger Weise können auch die in den Beispielen 1 bis 5 angegebenen Verfahrensweisen eingesetzt werden, jedoch immer mit der Maßgabe,daß ein Anteil Frucht von der gesamten Fruchtmenge abgezweigt und mit Glucosesirup gesondert eingekocht wird, während der Hauptteil an Frucht zusammen mit dem kristallinen Zucker und dem Pektin erhitzt wird.

In den Fällen, in denen Trocken-Pektine eingesetzt werden, wird unter Druck erhitzt. Werden dagegen Naß-Pektine verwendet, dann wird kurz unter Vakuum ohne Druck erhitzt. In diesem Falle wird der Anteil an Frucht des separat einzukochenden Anteils um 1 % bis 3 % erhöht. In allen Fällen erfolgt die Pektin-Zugabe nicht zu dem separat einzukochenden Anteil.

Die Verfahrensmaßnahme nach Anspruch 1 ist sowohl beim Vakuumverfahren als auch bei unter Druck arbeitenden Verfahren einsetzbar. Dies trifft sowohl auf das Einkochen des Hauptteils als auch auf den separierten Teil zu. Die Pektine können auch nach der Vereinigung des eingekochten separaten Teiles und des Hauptteiles hinzugegeben werden. Die in den Beispielen 1 bis 5 beschriebenen Verfahren können sich dann anschließen, nachdem beide Teile miteinander vereinigt sind. Die aus Frucht und Zucker bestehende Charge braucht vor der Zuführung des eingekochten Teils nicht gesondert erhitzt zu werden.

Beispiel 6 A

| | | |
|---|---|---|
| Einer ersten Charge aus | 45 % | Frucht, |
| | 20 % | Glucosesirup |
| | 35 % | Zucker |
| wird ein Anteil A von | 7 % | Frucht und |
| | 20 % | Glucosesirup |

entnommen und in einer zweiten Charge separat unter Vakuum oder in einem offenen Kochkessel eingekocht.

| | | |
|---|---|---|
| Der verbliebene Anteil B | | |
| der ersten Charge aus | 38 % | Frucht |
| | 35 % | Zucker |

einschließlich 0,3 % Trockenpektin wird unter Druck auf 95° bis 105°C erhitzt. Nach Abkühlen und Öffnen des Kochkessels werden die gesamten Anteile A und B miteinander vermischt. Zur pH-Einstellung werden 0,2 - 0,3 % Zitronensäure eingemischt. Die Feineinstellung der vorgegebenen Trockensubstanz erfolgt durch Einleiten von Heißluft oder durch kurzfristiges Vakuum. Das Produkt wird auf Geliertemperatur abgekühlt und abgefüllt.

Beispiel 7

Konfitürenherstellung/Versuchsausführung

| | | | |
|---|---|---|---|
| Einsatzprodukte: | Frucht-Erdbeeren - 10,1 % TS - | 45 % | 1000 g |
| | Zucker | 35 % | 778 g |
| | Glucosesirup, 555 g, 80 % TS - | 20 % | 444 g |
| | | 100 % | 2222 g |

A - Einkochung: Erdbeeren 100 g - 4,5 %
Glucosesirup 555 g - 20 %
655 g ./. 75 g Wasser 580
Einkochung 3 min, Temperatur bis 105°C

| | | | |
|---|---|---|---|
| B - Druckstufe: | Erdbeeren | 40,5 % | 900 g |
| | Pektin | 0,3 % | 7 g |
| | Zucker | 4,5 % | 100 g |
| | Entschäumer | | ------ |
| | Trockensubstanz: 41,1 % = 652 g | | 1587 g |

Druckeinstellung 1 bar bei 50 Grad C
Druckanstieg 1,4 bar bei 100 Grad C
Erhitzungszeit unter Druck 7,5 min
Öffnen des Behälters

| | | | |
|---|---|---|---|
| C - Einmischung | Zucker | 30,5 % | 678 g |
| | | | 2265 g |

Bei Einmischung fällt die Temperatur auf 80 Grac C
Einmischzeit 1,5 min
Schließen des Behälters
Erhitzung
Druckeinstellung 0 bar bei 80 Grad C
Druckanstieg 0,4 bar bei 100 Grad C
Erhitzungszeit 4 min
Öffnen des Behälters

| | | | |
|---|---|---|---|
| D - Einmischung | Zitronensäure | 0,2 % | 4 g |
| | | | 2269 g |

Einmischzeit 1 min
Abkühlung in 4 min auf 80 Grad C

| | | | |
|---|---|---|---|
| E - Abfüllung bei 80 Grad C | Ausbeute: | 2219 g | |
| Wasserdampfverlust während der Bearbeitung B bis E | | 50 g | |
| | | ====== | |
| Wasserdampfverluste, gesamt, A bis E | | 125 g | |

| | | | |
|---|---|---|---|
| Rechnerische Trockensubstanz der Einsatzprodukte einschließlich Trockenpektin und Zitronensäure A+B+C+D | - 652+678+4 | 1334 | g |
| Einsatzprodukte | - Ausbeute + Wasserdampfverlust | 2344 | g |
| " | - Rechnerische Trockensubstanz | 56,9 | % |
| Konfitüre | - Ausbeute - Rechnerische Trockensubstanz | 60,1 | % |
| Konfitüre | - Ausbeute - Refraktometerwert | 62,5 | % |
| Herstellungszeit | - A Einkochung, separat | 3 | min |
| " | - B + C Druck, Erhitzung | 13 | min |
| " | - D Säurezugabe, Kühlung | 5 | min |

Sämtliche Gewichtsangaben sind durch Auswiegen während der einzelnen Herstellungsabschnitte ermittelt worden.

## Patentansprüche

1. Verfahren zur Herstellung von pektin- und zuckerhaltigen Zubereitungen, insbesondere aus frischen oder frisch erhaltenen, entkernten oder entsteinten Früchten, Obstfruchtfleisch, Obstpulpe oder Obstmark, wie Marmelade, Konfitüre, dadurch gekennzeichnet, daß man
   a) der Gesamtmenge A an Einsatzprodukten aus Frucht, Glucosesirup und kristallinem Zucker einen Anteil B aus einem Teil Frucht der in der Gesamtmenge A eingesetzten Gesamtmenge an Frucht und dem gesamten Glucosesirup entnimmt, diesen Anteil B separat einkocht,
   b) den aus der Gesamtmenge A nach Abzug des Anteils B verbliebenen, aus dem größeren prozentualen Anteil Frucht und dem kristallinem Zucker bestehenden Anteil C mit Trocken-Pektin mischt, das erhaltene Mischprodukt unter Vakuum ohne Druck pasteurisiert (auf 95°C bis 110°C erhitzt) und
   c) den separat eingekochten Anteil B nach a) zusammen mit dem pasteurisierten Mischprodukt nach b) nach der Säurezugabe bei Geliertemperatur in Gläser abfüllt.

2. Verfahren zur Herstellung von pektin- und zuckerhaltigen Zubereitungen, insbesondere aus frischen oder frisch erhaltenen, entkernten oder entsteinten Früchten, Obstfruchtfleisch, Obstpulpe oder Obstmark, wie Marmelade, Konfitüre, dadurch gekennzeichnet, daß man
   a) der Gesamtmenge A an Einsatzprodukten aus Frucht, Glucosesirup und kristallinem Zucker einen Anteil B aus einem Teil Frucht, der in der Gesamtmenge A eingesetzten Gesamtmenge an Frucht und dem Glucosesirup entnimmt, diesen Anteil B separat einkocht, wobei dem separat einzukochenden Anteil B noch ein zusätzlicher Anteil an Frucht vor dem Einkochen zugesetzt wird,
   b) den aus der Gesamtmenge A nach Abzug des Anteils B verbliebenen, aus dem größeren prozentualen Anteil Frucht und dem kristallinem Zucker bestehenden Anteil C mit Naß-Pektin mischt, das erhaltene Mischprodukt unter Vakuum ohne Druck pasteurisiert (auf 95°C bis 110°C erhitzt) und
c) den separat eingekochten Anteil B nach a) zusammen mit dem pasteurisierten Mischprodukt nach b) nach der Säurezugabe bei Geliertemperatur in Gläser abfüllt.

**3.** Verfahren nach einem der Ansprüche 1 und 2,
dadurch gekennzeichnet,
daß man
a) einer ersten Charge aus 45 % Frucht, 10 % Glucosesirup und 45 % kristallinem Zucker ein Anteil von 5 % Frucht und 10 % Glucosesirup entnimmt,
b) die zweite Charge aus 5 % Frucht und 10 % Glucosesirup in einem Kochkessel unter Aromaverlust einkocht,
c) in einem gesonderten, geschlossenen Kessel den aus der ersten Charge verbleibenden Anteil von 40 % Frucht und 0 bis 45 % kristallinem Zucker mit 0,3 % Trocken-Pektin unter Druck oder bei Zusatz von Naß-Pektin unter Vakuum auf etwa 90°C bis 100°C erhitzt, das Kochprodukt bei dieser Temperatur etwa fünf Minuten hält,
d) das aus der zweiten Charge erhaltene, heiße Kochprodukt dem Produkt der ersten Charge mit den verbliebenen Anteilen hinzugibt, die beiden miteinander vermischten Kochprodukte auf Pasteurisierungstemperatur erhitzt und
e) nach Abkühlung auf 75° bis 85°C das erhaltene Endprodukt in Gläser abfüllt.

**4.** Verfahren nach Anspruch 1,
dadurch gekennzeichnet, daß man

| | | |
|---|---|---|
| a) | den Einsatzprodukten aus | 45 % Frucht |
| | | 5 % Glucosesirup |
| | | 50 % kristal. Zucker |
| b) | einen Anteil aus | 5 % Frucht und |
| | | 5 % Glucosesirup |

entnimmt und separat einkocht,

| | |
|---|---|
| c) die verbliebenen Einsatz- | |
| produkte aus | 40 % Frucht |
| | 45 % Zucker |

mit Trocken-Pektin mischt und in Abhängigkeit von der Löslichkeit der Pektine die Anteile aus den Stufen b) und c) einsetzt und unter Druck auf 95° bis 110°C erhitzt, und nach der Säurezugabe bei Geliertemperatur abfüllt, wobei die Feinabstimmung der vorgegebenen Trockensubstanz mit Heißluft vorgenommen wird, die über die Oberfläche des Produktes geleitet wird, oder mittels Vakuum erfolgt.

**5.** Verfahren nach einem der Ansprüche 1 und 2,
dadurch gekennzeichnet, daß man

| | |
|---|---|
| einer ersten Charge aus | 45 % Frucht |
| | 20 % Glucosesirup |
| | 35 % Zucker |
| einen Anteil A von | 7 % Frucht und |
| | 20 % Glucosesirup |

entnimmt, und in einer zweiten Charge separat unter Vakuum oder in einem offenen Kochkessel einkocht,

| | |
|---|---|
| den verbliebenen Anteil B | |
| der ersten Charge aus | 38 % Frucht |
| | 35 % Zucker |

einschließlich 0,3 % Trocken-Pektin unter Druck oder Naß-Pektin unter Vakuum auf 95° bis 105°C erhitzt, nach Abkühlen und öffnen des Kochkessels die gesamten Anteile A und B miteinander vermischt, und zur pH-Einstellung 0,2 - 0,3 % Zitronensäure einmischt, wobei die Feineinstellung der vorgegebenen Trockensubstanz durch Einleiten von Heißluft oder durch kurzfristiges Vakuum erfolgt, und dann das Produkt auf Geliertemperatur abkühlt und in Gläser oder Dosen abfüllt.

**6.** Verfahren nach Anspruch 1, dadurch gekennzeichnet, daß
a) in einem offenen Kochkessel eine vorgegebene Fruchtmenge zusammen mit einer Zucker-Trocken-Pektin -Mischung aus einem Teil Trocken-Pektin und fünfzehn Teilen Zucker, wobei die Menge an eingesetztem kristallinen Zucker etwa 2 % bis 10 % der gesamten eingesetzen Zuckermenge entspricht, auf 70°C erhitzt,
b) der offene Kochkessel hierauf geschlossen oder sofort nach der Pektinzugabe verschlossen und dao Zucker-Trocken-Pektin-Frucht-Gemisch etwa sieben Minuten auf 85° bis 90°C erhitzt,
c) hiernach die restliche Menge an kristallinem Zucker und Glucosesirup zugegeben ist, wobei die Temperatur in dem Kochkessel von 85° auf 60°C absinkt,
d) durch Ansetzen von Vakuum über ein Heißluftgebläse abgedampft wird,
wobei in der
Stufe a) ein Schaumverhüter und in der
Stufe c) Zitronensäure als Genußsäure hinzugegeben werden, und daß während des Herstellungsvorganges der jeweilige Zuckergehalt refraktometrisch ermittelt wird.

**7.** Verfahren nach Anspruch 1, dadurch gekennzeichnet, daß in der

| | |
|---|---|
| Stufe a) | 45 kg Frucht |
| | 1 kg kristalliner Zucker |
| | Entschäumer |
| | 0,3 bis 0,5 kg Trocken-Pektin, in der |
| Stufe c) | 50 kg kristalliner Zucker |
| | 5 kg Glucosesirup (80%ig) |
| | 0,2 bis 0,3 kg Zitronensäure |

eingesetzt werden.

**8.** Verfahren nach einem der vorangegangenen Ansprüche 6 bis 7, dadurch gekennzeichnet, daß anstelle

eines Lösens der Trocken-Pektine bei einem hohen Zuckergehalt bei einer oberhalb 100°C liegenden Temperatur im geschlossenen Kochkessel unter Druck das Lösen der Trocken-Pektine bei einer unterhalb der Temperatur von 100°C liegenden Temperatur insbesondere vermittels eines durch Zuleiten eines neutralen Gases, wie z.B. Kohlendioxid-Gas, erzeugten zusätzlichen Druckes vorgenommen wird.

**9.** Verfahren nach Anspruch 8, dadurch gekennzeichnet, daß in einem offenen Kochkessel ein Gemisch aus 45 % Frucht und 21 % kristallinem Zucker auf 70°C kurzzeitig erhitzt, hierauf ein Gemisch aus 4,5 % kristallinem Zucker und 0,3 Anteilen Trocken-Pektin eingerührt, der Kochkessel verschlossen und Druckluft in den Innenraum des Kochkessels bis zu einem Überdruck von 0,6 bis 0,8 bar bei gleichzeitiger Temperatursteigerung auf 90°C eingeleitet, das Gesamtgemisch bei Überdruck bei 70°C bis 90°C vier Minuten gehalten wird, wobei der Überdruck nur während der Erhitzung aufrechterhalten wird, danach der Überdruck aufgehoben, der Kochkessel geöffnet, dann 25,5 % kristalliner Zucker und 4 % Glucosesirup hinzugegeben wird, wobei die Einstellung der Trockensubstanz auf 62 % mittels eines Heißluftgebläses erfolgt, dann der gesamte Ansatz auf 95°C erhitzt, hierauf 7 g Zitronensäure eingerührt und auf 75°C abgekühlt und in Gläser abgefüllt wird.

**10.** Verfahren nach Anspruch 8, dadurch gekennzeichnet, daß in einem offenen Kochkessel ein Gemisch aus 45 % Frucht, 46,5 % kristallinem Zucker und 4 % Glucosesirup auf 70°C erhitzt, hierauf ein Gemisch aus 4,5 % kristallinem Zucker und 0,3 Anteile Trocken-Pektin eingerührt, der Kochkessel verschlossen und Druckluft in den Innenraum des Kochkessels bis zu einem Überdruck von 0,6 bis 0,8 bar bei gleichzeitiger Temperatursteigerung auf etwa 95°C fünf Minuten gehalten wird, wobei der Überdruck nur während der Erhitzung aufrechterhalten wird, danach der Überdruck aufgehoben, der Kochkessel geöffnet und die Einstellung der Trockensubstanz mit einem Heißluftgebläse vorgenommen wird, wobei bei weiterer Erhitzung die Temperatur während der Einstellung auf 90°C sinkt, worauf 7 g Zitronensäure hinzugegeben, auf Geliertemperatur bis 75°C abgekühlt und in Gläser abgefüllt wird.

**11.** Verfahren nach Anspruch 1, dadurch gekennzeichnet, daß in einem geschlossenen Kochkessel ein Gemisch aus 45 % Frucht und 21 % kristallinem Zucker auf 70°C kurzzeitig erhitzt, hierauf ein Gemisch aus 4,5 % kristallinem Zucker und 0,3 Anteilen Trocken-Pektin eingerührt, auf 90°C erhitzt, das Gesamtgemisch bei 70°C bis 90°C vier Minuten gehalten wird, danach der Kochkessel geöffnet, dann 25,5 % kristalliner Zucker und 4 % Glucosesirup hinzugegeben wird, wobei die Einstellung der Trockensubstanz auf 62 % mittels eines Heißluftgebläses erfolgt, dann der gesamte Ansatz auf 95°C erhitzt, hierauf 0,2 bis 0,3 % Zitronensäure eingerührt und auf 75°C abgekühlt und in Gläser abgefüllt wird.

**12.** Verfahren nach Anspruch 1, dadurch gekennzeichnet, daß in einem geschlossenen Kochkessel ein Gemisch aus 45 % Frucht, 46,5 % kristallinem Zucker und 4 % Glucosesirup auf 70°C erhitzt, hierauf ein Gemisch aus 4,5 % kristallinem Zucker und 0,3 Anteile Trocken-Pektin eingerührt, auf etwa 95°C erhitzt und bei dieser Temperatur etwa fünf Minuten gehalten wird, danach der Kochkessel geöffnet und die Einstellung der Trockensubstanz mit einem Heißluftgebläse vorgenommen wird, wobei bei weiterer Erhitzung die Temperatur während der Einstellung auf 90°C sinkt, worauf 7 g Zitronensäure hinzugegeben, auf Geliertemperatur bis 75°C abgekühlt und in Gläser abgefüllt wird.

## Claims

**1.** Process for the production of pectin and sugar containing preparations, more particularly from fresh fruit which has been preserved to as to remain fresh, cored, stoned or seeded fruit, fruit pulp or concentrated fruit pulp, like jelly, jam or suchlike,

**characterized in that,**

a) from the total quantity A of products employed comprising fruit, glucose syrup and crystallizeg sugar, a component B of a part of the fruit of the total quantity of fruit and the entire glucose syrup used in the total quantity A, is removed and this comonent B is separately thickened by boiling;

b) the component C remaining of the total quantity A following the removal of the component B comprising the greater percentage component of fruit and crystallized sugar is mixed with powdered pectin, the mixed product obtained is pasteurized in a vaccum without pressure (heated to from 95°C to 110°C), and

c) the separately boiled-down component B according to a), together with the mixed product according to b), following the addition of citric acid, is filled into glass jars at gelation temperature.

2. Process for the production of pectin and sugar containing preparations, more particularly from fresh fruit or fruit which has been preserved so as to remain fresh, cored, stoned or seeded fruit, fruit pulp or concentrated fruit pulp, like jelly, jam or suchlike,
**characterized in that**,
a) from the total quantity A of products employed comprising fruit, glucose syrup and crystallized sugar, a component B of a part of the fruit of the total quantity of fruit and the glucose syrup used in the total quantity A is removed, this component B is separately thickened by boiling, in this case an additional component of fruit is added prior to the boilung process to the component B to be boiled down separately;
b) the proportion C which remains of the total quantity A follwing the removal of the component B comprising the larger percentage component of fruit and crystallized sugar is mixed with acqueous pectin, the mixed product obtained is pasteurized in vaccum without pressure (heated to from 95°C to 110°C), and
c) the separately boiled-down component B according to a) is, together with the pasteurized mixed product according to b), following the addition of citric acid, filled into glass jars at gelation temperature.

3. Process according to either Claim 1 or 2,
**characterized in that**,
a) from a first batch of 45% fruit, 10% glucose syrup and 45% crystallized sugar, a component comprising 5% fruit and 10% glucose syrup is removed;
b) the second batch comprising 5% fruit and 10% glucose syrup is thickened by boiling in a cooking vat, incurring an aroma loss in the process;
c) in a separate closed vat, the component remaining of the first batch comprising 40% fruit and 0 to 45% crystallized sugar is heated with 0.3% powdered pectin under pressure or, with the addition of aqueous pectin, in vaccum to approximately 90°C to 100°C, the product being boiled is maintained at this temperature for approximately five minutes;
d) the hot boiled product obtained from the second batch is added to the product of the first batch with the remaining components, the two intermixed boiled products are heated to pasteurization temperature, and
c) after having cooled to from 75°C to 85°C, the final product is filled into glass jars.

4. Process according to Claim 1,
**characterized in that,**

a) from the products employed comprising
45% fruit
5% glucose syrup
50% crystallized sugar,

b) a component comprising 5% fruit and
5% glucose syrup

is removed and thickened by boiling separately,

c) the remaining products employed comprising
40 % sugar and
45% fruit

is mixed with powdered pectin and, in dependence upon the solubility of the pectins, the components from the steps b) and c) are used and, under pressure, heated to from 95°C to 110°C and, following the addition of acid, are filled into jars at gelation temperature, the fine standardization of the predetermined

solid matter is effected by means of hot air which is passed over the surface of the product or effected by means of vacuum.

5. Process according to either Claim 1 or 2, **characterized in that**,

| | |
|---|---|
| from a first batch comprising | 45% fruit |
| | 20% glucose syrup |
| | 35% sugar, |
| a component A comprising | 7% fruit and |
| | 20% glucose syrup |

is removed and separately thickened by boiling in a second batch in vacuum or in an open cooking vat, while the remaining component B of the batch comprising

| | |
|---|---|
| | 38% fruit and |
| | 35% sugar |

inclusive of 0.3% powdered pectin is heated under pressure or with acqueous pectin in vacuum to from 95°C to 105°C, following the cooling and opening of the cooking vat, the total components A and B are intermixed and, for the pH standardization, 0.2 - 0.3% citric acid are incorporated, in which case the fine standardization of the predetermined solid matter is effected by the introduction of hot air or by brief vaccum, the product is then cooled to gelation temperature and filled into jars or tins.

6. Process according to claim 1, **characterized in that**,
   a) in an open cooking vat, a predetermined quantity of fruit, together with a mixture of sugar and powdered pectin comprising one part powdered pectin and fifteen parts sugar, the quantity of crystallized sugar employed and corresponding to approximately 2% to 10% of the entire quantity of sugar used, is heated to 70°C;
   b) the open cooking vat is closed hereupon or is closed immediately after the addition of pectin and the mixture of sugar - powdered pectin - fruit is heated for approximately seven minutes to 85°C to 90°C;
   c) following this the remaining quantity of crystallized sugar and glucose syrup is added while the temperature in the cooking vat drops from 85°C to 60°C;
   d) by the production of a vacuum, is evaporated with the aid of a hot-air blower,

   in which connection, in the
   Step a), an anti-frothing agent, and in the
   Step c), citric acid are added in the form of fruit acid, and in that, during the production process, the respective sugar content is determined by refractometric means.

7. Process according to Claim 1, **characterized in that**, in the

| | |
|---|---|
| Step a), | 45 kg fruit |
| | 1 kg crytallized sugar |
| | antifrothing agent |
| | 0.3 to 0.5 kg powdered pectin, in the |
| Step c), | 50 kg crystallized sugar |
| | 5 kg glucose syrup (80%) |
| | 0.2 to 0.3 kg citric acid |

are employed.

**8.** Process according to any of the preceding Caims 6 to 7,
**characterized in that**,
in lieu of a dissolution of the powdered pectins with high sugar contant at a temperature of above 100°C in a closed cooking vat under pressure, the dissolution of the powdered pectins is effected at a temperature of belo 100°C especially by means of an additional pressure produced by supplying a neutral gas, such as e.g. carbon dioxide.

**9.** Process according to Claim 8,
**characterized in that,**
in an open cooking vat, a mixture comprising 45% fruit and 21% crystallized sugar is heated briefly to 70°C, following this a mixture of 45% crystallized sugar and 0.3 parts powdered pectin is stirred in, the cooking vat is closed and compressed air is intrpduced into the interior of the cooking vat up to an excess pressure of from 0.6 to 0.8 bar while the temperature is simultaneously increased to 90°C, the total mixture is maintained at excess pressure at 70°C to 90°C for four minutes, the excess pressure is maintained only during the heating process, following this the excess pressure is discontinued, the cooking vat opened, then 25.5% crystallized sugar and 4% glucose syrup are added, while the standardization of the solid matter to 62% is effected with the aid of a hot air blower, the entire charge is then heated to 95°C, hereupon 7 g citric acid are stirred in and the product is cooled to 75°C and filled into glass jars.

**10.** Process according to Claim 8,
**characterized in that**,
in an open cooking vat, a mixture comprising 45% fruit, 46.5% crystallized sugar and 4% glucose syrup is heated to 70°C, hereupon a mixture of 4.5% crystallized sugar and 0.3 parts powdered pectin is stirred in, the cooking vat is closed and compressed air is introduced into the interior of the cooking vat up to an excess pressure of from 0.6 to 0.8 bar while the temperature is increased at the same time to approximately 95°C and maintained there for five minutes, in which case the excess pressure is maintained only during the heating process, following this the excess pressure is discontinued, the cooking vat opened and the standardization of the solid matter is effected with the aid of a hot air blower, while the heating continues, the temperature drops to 90°C during the standardization process, whereupon 7 g citric acid are added, the product is cooled to 75°C and the product is filled into glass jars.

**11.** Process according to Claim 1,
**characterized in that**,
in a closed cooking vat, a mixture comprising 45% fruit and 21% crystallized sugar is briefly heated to 70°C, hereupon a mixture of 4.5% crystallized sugar and 0.3 parts powdered pectin is stirred in, heated to 90°C, the entire mixture is maintained at from 70°C to 90°C for four minutes, following this the cooking vat is opened, then 25.5% crystallized sugar and 4% glucose syrup are added, while the standardization of the solid matter to 62% is effected with the aid of a hot air blower, the entire batch is then heated to 95°C, hereupon 0.2 to 0.3% citric acid is stirred in and the pro duct is cooled to 75°C and filled into glass jars.

**12.** Process according to Claim 1,
**characterized in that**,

in a closed cooking vat, a mixture comprising 45% fruit, 46.5% crystallized sugar and 4% glucose syrup is heated to 70°C, hereupon a mixture of 4.5% crystallized sugar and 0.3 parts powdered pectin is stirred in, heated to approximately 95°C and maintained at this temperature for approximately five minutes, following this the cooking vat is opened and the standardization of the solid matter is effected with the aid of a hot air blower, with a further heating, the temperature drops to 90° during the standardization process, whereupon 7 g citric acid are added, the product is cooled off to 75°C and is then filled into glass jars.

## Revendications

1. Procédé pour la production de préparations contenant de la pectine ou du sucre, en particulier de fruits frais ou maintenus frais, dénoyautés, de chair, de pulpe, de moelle de fruit, comme marmelade, confiture, caractérisé en ce que
   a) l'on retire de la quantité totale de produit utilisé A constituée de fruit, de sirop de glucose et de sucre cristallisé une partie B constituée de la quantité totale de fruit et de sirop de glucose prélevée sur la quantité A et que cette partie B est cuite séparément,
   b) l'on mélange la quantité restante C de la quantité A après retrait de la part B, constituée pour la plus grande partie de fruit et de sucre cristallisé avec de la pectine solide, que l'on pasteurise le mélange ainsi obtenu sous vide et sans pression (chauffé à une température de 95 °C à 110 °C) et
   c) l'on remplit dans des verres la partie cuite séparément B selon a) avec le mélange pasteurisé selon b) après acidification à la température de gélification.

2. Procédé pour la production de préparations contenant de la pectine ou du sucre, en particulier de fruits frais ou maintenus frais, dénoyautés, de chair, de pulpe, de moelle de fruit, comme marmelade, confiture, caractérisé en ce que
   a) l'on retire de la quantité totale de produit utilisé A constituée de fruit, de sirop de glucose et de sucre cristallisé une partie B constituée de la quantité totale de fruit et de sirop de glucose prélevée sur la quantité A, la partie B étant cuite séparément et la partie B recevant avant la cuisson une partie supplémentaire constituée de fruit,
   b) l'on mélange la quantité restante C de la quantité A après retrait de la partie B, constituée pour la plus grande partie de sucre cristallisé avec de la pectine humide, l'on pasteurise le mélange ainsi obtenu sous vide et sans pression (chauffé à une température de 95 °C à 110 °C) et
   c) l'on remplit dans des verres la partie cuite séparément B selon a) avec le mélange pasteurisé selon b) après acidification à la température de gélification.

3. Procédé selon l'une des revendications 1 et 2 caractérisé en ce que
   a) l'on retire sur la première charge constituée de 45% de fruit, de 10% de sirop de glucose et de 45% de sucre cristallisé une partie constituée de 5% de fruit et de 10% de sirop de glucose,
   b) l'on cuit la seconde charge constituée de 5% de fruit et de 10% de sirop de glucose dans un chaudron avec perte d'arôme
   c) l'on chauffe dans un chaudron séparé fermé la partie restante de la première charge constituée de 40% de fruit et de 0 à 45% de sucre cristallisé mélangé à 0,3% de pectine solide sous pression ou après adjonction de pectine humide sous vide à une température d'environ 90 °C à 100 °C, et que l'on maintient le produit de cuisson environ cinq minutes à cette température,
   d) l'on ajoute au produit de cuisson chaud de la première charge la deuxième charge avec les parties restantes, que l'on porte les deux produits de cuisson mélangés à la température de pasteurisation et
   e) l'on remplit dans des verres le produit final ainsi obtenu après refroidissement à une température de 75 °C à 85 °C.

4. Procédé selon la revendication 1,
   caractérisé en ce que l'on
   prélève et cuit séparément

| | | |
|---|---|---|
| a) | le produit utilisé constitué de | 45% de fruit<br>5% de sirop de glucose<br>50% de sucre cristallisé |
| b) | une partie séparée constituée de | 5% de fruit et<br>5% de sirop de glucose, |
| c) | que l'on mélange les produits utilisés restant constitués de | 40% de fruit<br>45% de sucre |

avec de la pectine solide et que l'on ajoute les parties provenant des phases b) et c) en fonction de la solubilité de la pectine, que l'on chauffe sous pression à une température de 95 °C à 110 °C et que l'on remplit dans des verres après acidification à la température de gélification, le réglage précis de la substance solide étant réalisé sous courant d'air chaud dirigé sur la surface du produit ou sous vide.

**5.** Procédé d'après l'une des revendications 1 et 2, caractérisé en ce que l'on prélève

| | |
|---|---|
| sur une première charge de | 45% de fruit<br>20% de sirop de glucose<br>35% de sucre |
| une part A constituée de | 7% de fruit et<br>20% de sirop de glucose, |

pour la cuire séparément dans une seconde charge sous vide ou dans un chaudron ouvert, que l'on chauffe la partie restante B de la première charge constituée de

38% de fruit
35% de sucre

y compris 0,3% de pectine solide sous pression, ou de pectine humide sous vide à une température de

95 °C à 105 °C, que l'on mélange l'une avec l'autre les parts entières A et B après refroidissement et ouverture du chaudron, et que l'on incorpore 0,2 à 0,3% d'acide citrique pour le dosage du pH, le dosage précis de la quantité prescrite de substance solide étant réalisé sous courant d'air chaud ou par établissement rapide du vide, le produit étant ensuite refroidi à la température de gélification et transvasé dans des verres ou des boîtes.

6. Procédé d'après la revendication 1, caractérisé en ce que
   a) l'on chauffe à 70 °C dans un chaudron ouvert une quantité préétablie de fruit avec un mélange de sucre et de pectine solide constituée d'une part de pectine solide pour quinze parts de sucre, la quantité de sucre cristallisé utilisé représentant environ 2% à 10% de la quantité totale de sucre,
   b) le chaudron jusque-là ouvert est fermé ou fermé immédiatement après l'adjonction de pectine, le mélange de sucre, pectine solide, fruit étant tenu pendant environ sept minutes à une température de 85 °C à 90 °C,
   c) après quoi les quantités restantes de sucre cristallisé et de sirop de glucose sont ajoutées, la température du chaudron s'étant abaissée à 85 °C - 60 °C,
   d) l'évaporation est exécutée en établissant le vide ou par l'intervention d'une soufflante d'air chaud, cela étant, on ajoute
   pendant la phase a) un agent antimoussant et pendant la phase c) de l'acide citrique sous forme d'acide alimentaire et la teneur en sucre est contrôlée pendant tout le processus de fabrication par réfractomètre.

7. Procédé d'après la revendication 1 caractérisé en ce que l'on ajoute

| | |
|---|---|
| dans la phase a) | 45 kg de fruit<br>1 kg de sucre cristallisé<br>agent antimoussant<br>0,3 à 0,5 kg de pectine solide |
| dans la phase c) | 50 kg de sucre cristallisé<br>5 kg de sirop de glucose (à 80%)<br>0,2 à 0,3 kg d'acide citrique. |

8. Procédé selon l'une des revendications 6 à 7 ci-dessus caractérisé en ce que au lieu de dissoudre la pectine solide dans le mélange à teneur en sucre élevée porté à une température supérieure à 100 °C dans un chaudron fermé et sous pression, la pectine solide est solubilisée à une température inférieure à 100 °C, par application d'une pression supplémentaire obtenue en particulier par l'intervention d'un gaz neutre comme par exemple le gaz de houille.

9. Procédé selon la revendication 8 caractérisé en ce que dans un chaudron ouvert on chauffe rapidement à 70 °C un mélange de 45% de fruit et de 21% de sucre cristallisé, que l'on introduit ensuite un mélange de 4,5% de sucre cristallisé et de 0,3 part de pectine solide, que le chaudron est fermé et que l'on applique à l'intérieur du chaudron une surpression de 0,6 à 0,8 bar, alors que la température est portée à 90 °C, que l'intégralité du mélange est maintenue pendant quatre minutes sous surpression à une température de 70 °C à 90 °C, la surpression n'étant maintenue que pendant la phase de chauffage après quoi la surpression est coupée, après quoi le chaudron est ouvert, on ajoute ensuite 25,5% de sucre cristallisé et 4% de sirop de glucose, le dosage à 62% de la substance solide étant réalisé au moyen d'une soufflante d'air chaud, après quoi le mélange ainsi obtenu est porté à 95 °C, après quoi l'on dilue 7 g d'acide citrique et laisse refroidir à 75 °C pour transvaser ensuite dans des verres.

10. Procédé selon la revendication 8 caractérisé en ce que dans un chaudron ouvert on chauffe à 70 °C un mélange de 45% de fruit, de 46,5% de sucre cristallisé et de 4% de sirop de glucose, que l'on introduit ensuite un mélange de 4,5% de sucre cristallisé et de 0,3 part de pectine solide, que le chaudron est fermé

et que l'on applique à l'intérieur du chaudron une surpression de 0,6 à 0,8 bar, alors que l'on chauffe et que la température est maintenue pendant cinq minutes à environ 95 °C, la surpression n'étant maintenue que pendant la phase de chauffage, après quoi le chaudron est ouvert, le dosage de la substance solide est exécuté au moyen d'une soufflante d'air chaud, la température baissant à 90 °C pendant la phase de dosage alors que l'on continue de chauffer, après quoi l'on dilue 7 g d'acide citrique et laisse refroidir à la température de gélification de 75 °C pour transvaser ensuite dans des verres.

**11.** Procédé selon la revendication 1, caractérisé en ce que l'on chauffe rapidement à 70 °C dans un chaudron fermé un mélange constitué de 45% de fruit et 21% de sucre cristallisé, après quoi l'on dilue un mélange constitué de 4,5% de sucre cristallisé et de 0,3 part de pectine solide, on chauffe à 90 °C, le mélange est maintenu pendant quatre minutes à une température de 70 °C à 90 °C, le chaudron étant tenu ouvert, après quoi l'on ajoute 25,5% de sucre cristallisé et 4% de sirop de glucose, le dosage à 62% de la substance solide étant exécuté au moyen d'une soufflante d'air chaud, après quoi toute la charge est chauffée à 95 °C, ensuite l'on dilue 0,2 à 0,3% d'acide citrique, laisse refroidir à 75 °C pour transvaser dans des verres.

**12.** Procédé selon la revendication 1, caractérisé en ce que l'on chauffe à 70 °C dans un chaudron fermé un mélange de 45% de fruit, de 46,5% de sucre cristallisé et de 4% de sirop de glucose, après quoi l'on dilue un mélange constitué de 4,5% de sucre cristallisé et de 0,3 part de pectine solide, on chauffe à environ 95 °C, le mélange est maintenu pendant environ cinq minutes à cette température, le dosage de la substance solide étant exécuté au moyen d'une soufflante d'air chaud, la température de dosage descendant à 90 °C alors que l'on continue de chauffer, ensuite l'on dilue 7 g d'acide citrique, laisse refroidir à la température de gélification jusqu'à 75 °C pour transvaser dans des verres.